# EUROPÄISCHE PATENTSCHRIFT

(11) **EP 1 136 770 B1**
(45) Veröffentlichungstag und Bekanntmachung des Hinweises auf die Patenterteilung: **23.11.2005**
(21) Anmeldenummer: 01100949.5
(22) Anmeldetag: 17.01.2001
(51) Int. Cl.: F25B 33/00, F25B 15/10

(54) **Kocher für eine Diffusionsabsorptionsanlage**
Boiler for a diffusion-absorption system
Bouilleur pour système d'absorption à diffusion

(30) Priorität: 22.03.2000 DE 10014128
(43) Veröffentlichungstag der Anmeldung: 26.09.2001
(73) Patentinhaber: BBT Thermotechnik GmbH, 35576 Wetzlar (DE)
(72) Erfinder: Schulte, Uwe, 35037 Marburg (DE); Korinth, Christoph, 57555 Mudersbach (DE); Vloon, Paulus Jacobus, 7422 RM Deventer (NL); Lammert Wierenga, Hendrik Jacob, 8196 KC Welsum (NL)

(56) Entgegenhaltungen:
- EP-A- 0 419 606
- DE-C- 478 338
- US-A- 2 030 265
- US-A- 4 127 993

## Beschreibung

Die Erfindung betrifft einen Kocher für eine Diffusionsabsorptionsanlage nach dem Oberbegriff des Patentanspruches 1.
Diffusionsabsorptionsanlagen sind als Kleinkälteanlagen zur Verwendung in Haushaltskühlschränken seit langem bekannt. Sie können mit einer entsprechenden konstruktiven Gestaltung auch als Wärmepumpen zu Heiz- oder Kühlzwecken eingesetzt werden. In diesen Anlagen wird das Kältemittel Ammoniak (NH₃) und Wasser als Stoffpaar eingesetzt. Dabei stellt das Wasser als Lösungsmittel den absorbierenden Stoff dar, wobei als druckausgleichendes Trägergas in der Regel Wasserstoff oder Helium verwendet wird. Als Arbeitsmedium im Kreisprozess setzt sich das Ammoniak-Wasser-Gemisch bei Wärmezufuhr durch Temperatur- und Konzentrationsunterschiede in Bewegung.
Die Wärmezufuhr erfolgt in einem Kocher. Durch Sieden werden Gasblasen aus der NH₃-reichen Lösung ausgetrieben. Der Wasseranteil in diesem Gasstrom wird im Rektifikator abgeschieden bzw. zurückgeführt, so dass fast nur NH₃-Dampf zum Kondensator strömt. Dabei muss die Gasblasenpumpe so ausgebildet sein, dass sie die Flüssigkeit auf eine erhebliche Höhe pumpt, um die nötige Antriebskraft zu erzeugen. Der hochreine Ammoniakdampf kondensiert und gibt dabei die Kondensationswärme an das Heizungswasser ab. Anschließend strömt das flüssige Ammoniak nach unten in den Verdampfer. In der Helium-Ammoniak-Atmosphäre verdampft das Ammoniak unter Aufnahme von Umgebungsenergie. Danach gelangt das Gasgemisch durch einen Gas-Gas-Wärmetauscher und strömt zum Absorber, wo das gasförmige Ammoniak von der NH₃-armen Ammoniak-Wasser-Lösung absorbiert wird und die Absorptionswärme an das Heizungswasser abgibt, bevor der geräuschfreie Prozess wieder neu beginnt.

Sowohl die EP 0 413 791 B1 als auch die EP 0 419 606 B1 zeigen eine Diffusionsabsorptionsanlage mit den einzelnen Aggregaten. Diese sind jeweils als separate Bauteile ausgeführt und über Leitungen miteinander verbunden. Weil der Arbeitsdruck bei derartigen Anlagen mehr als 20 bar beträgt, müssen alle Aggregate und Leitungen entsprechend druckfest gestaltet sein. Daher ergibt sich bei diesem Aufbau eine große Anzahl von Schweißnähten, die sehr hochwertig bzw. genau ausgeführt sein müssen. Insgesamt entsteht für die einzelnen Druckbehälter und Leitungen ein erheblicher Material-, Fertigungs- und Prüfaufwand.
Die EP 0 419 606 B1 enthält einen Austreiber mit einer Gasblasenpumpe. Dieser besitzt sechs kreisförmig angeordnete Pumpenrohre und im unteren Bereich ebenfalls sechs Flammenrohre auf einem Teilkreis zur Beheizung mit je einem Gasbrenner. In der altemierenden Anordnung berührt jedes Flammenrohr je zwei Pumpenrohre und ist mit diesen verschweißt. Außerdem verlaufen die Pumpenrohre als voneinander getrennte Einzelbauteile direkt im zentralen Abgaskamin. Mit dieser relativ komplizierten Konstruktion aus Rohrbogen und Einzelrohren entsteht die Notwendigkeit zur Herstellung und Verschweißung vieler Einzelbauteile mit dem vorstehend beschriebenen Aufwand.
Aus der Konstruktion von Kälteanlagen sind einzelne Zellen mit Kocherrohren bekannt. Dabei ist jedes einzelne Kocherrohr von einem zylindrischen Mantel umgeben. Im Zwischenraum strömt die Kältemittellösung. Es lassen sich damit allerdings nur kleine Leistungen erreichen.

Der Erfindung liegt die Aufgabe zugrunde, den Aufbau eines Kochers für eine Diffusionsabsorptionsanlage zu optimieren und dadurch den Fertigungsaufwand zu reduzieren.

Erfindungsgemäß wird dies mit den Merkmalen des Patentanspruches 1 gelöst. Vorteilhafte Weiterbildungen sind den Unteransprüchen zu entnehmen.
Der Kocher für eine Diffusionsabsorptionsanlage ist dadurch gekennzeichnet, dass in einem abgeschlossenen druckbeständigen Behälter mehrere Kocherrohre kreisförmig um eine zentrale Beheizungseinrichtung mit darüber liegendem Abgaskamin angeordnet sind. Es entsteht ein ringzylindrischer Raum um die Kocherrohre, der im unteren Bereich an der Innenseite von einer Wand um die Beheizungseinrichtung bzw. weiter oberhalb vom Abgaskamin begrenzt ist. Eine weitere Wand bildet den Außenmantel um die Kocherrohre. Der Raum zwischen der inneren und äußeren Wand ist insbesondere mit armer Ammoniak-Wasser-Lösung gefüllt. Die Kocherrohre sind vorzugsweise gerade ausgebildet und münden mit ihrer Stirnseite an einer ringförmigen Flanschplatte in den unteren Ansaugraum, sind mit dieser verbunden oder passgenau daran fixiert.
Ein nach unten offener Ringraum isoliert den Raum um die beheizten Kocherrohre vom umgebenden Ansaugraum und/oder Reservoir mit der reichen Ammoniak-Wasser-Lösung. Der Ringraum ergibt sich durch eine weitere Wand, welche mit Abstand um die äußere, die Kocherrohre einfassende Wand verläuft. Diese zusätzliche Wand bzw. der damit ausgebildete Ringraum erstreckt sich mindestens über den unteren Bereich der Kocherrohre, vorzugsweise über den gesamten Bereich des Reservoirs, d. h. bis in den Bereich des maximalen Flüssigkeitsspiegels.
Der Ringraum ist so bemessen, dass im Inneren die Dampfbildung in der von unten eindringenden reichen Ammoniak-Wasser-Lösung durch die von der Innenseite her übertragene Wärme zunächst gefördert wird. Mit der Dampfbildung nimmt die Isolationswirkung weiter zu. An ihrer Oberseite ist die zusätzliche Wand entweder dichtend mit der die Kocherrohre einschließenden Wand verbunden oder passgenau an dieser fixiert. Hauptsächlich wird damit verhindert, dass sich im Ansaugraum bzw. im Reservoir Ammoniakdampf bildet und aufsteigt.
In einer alternativen Ausführungsform kann die ringförmige Flanschplatte etwa auf dem Niveau des oberen Bereichs des Reservoirs angebracht sein. Die Kocherrohre sind ebenfalls daran fixiert, jedoch ragen sie - genauso wie die umgebende Wand - von der Flanschplatte aus mit einem frei überstehenden Ende in den Ansaugraum. Dabei ist der untere Kocherrohrbereich vollständig von reicher Ammoniak-Wasser-Lösung umgeben und die Isolierwirkung zwischen dem Raum um die beheizten Kocherrohre und dem äußeren Bereich des umgebenden Ansaugraumes bzw. des Reservoirs ist somit auch gegeben. Mit dem erfindungsgemäßen Aufbau ist es möglich, einen Kocher einfacher zu fertigen. Der Außenmantel um die Kocherrohre muss nicht eine druckbeständige, sondern im wesentlichen nur eine flüssigkeitsdichte Wand sein. Sie dient lediglich zur Trennung von armer Ammoniak-Wasser-Lösung im Ringraum von reicher Lösung im Ansaugraum oder Reservoir und kann daher einfacher ausgeführt sein. Gleiches gilt für die Verbindungen innerhalb des umgebenden Druckbehälters. Schweißnähte sind gut zugänglich, können durch Punktschweißungen ersetzt werden oder sogar entfallen.
Durch die kreisförmige Anordnung mehrerer Kocherrohre lassen sich insgesamt größere Leistungen bei einer Diffusionsabsorptionsanlage realisieren. Trotzdem hat die Gesamtanlage eine kompakte Bauform. Insbesondere aus fertigungstechnischer Sicht ist eine Leistungssteigerung im Kocher leicht möglich. Bei gleichbleibendem Aufbau wird lediglich die Anzahl der Kocherrohre im Ringraum variiert.

Die Zeichnung stellt ein Ausführungsbeispiel der Erfindung dar. Es zeigt, jeweils im senkrechten Schnitt:

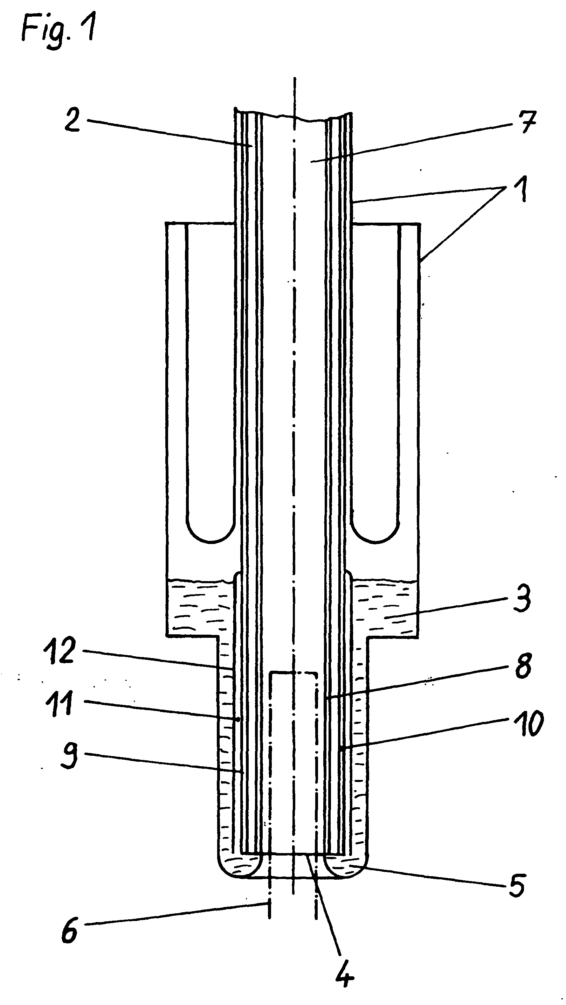

Fig. 1: Den unteren Bereich eines Kochers für eine Diffusionsabsorptionsanlage und
Fig. 2: einen vergrößerten Ausschnitt mit einer alternativen Ausführungsform.

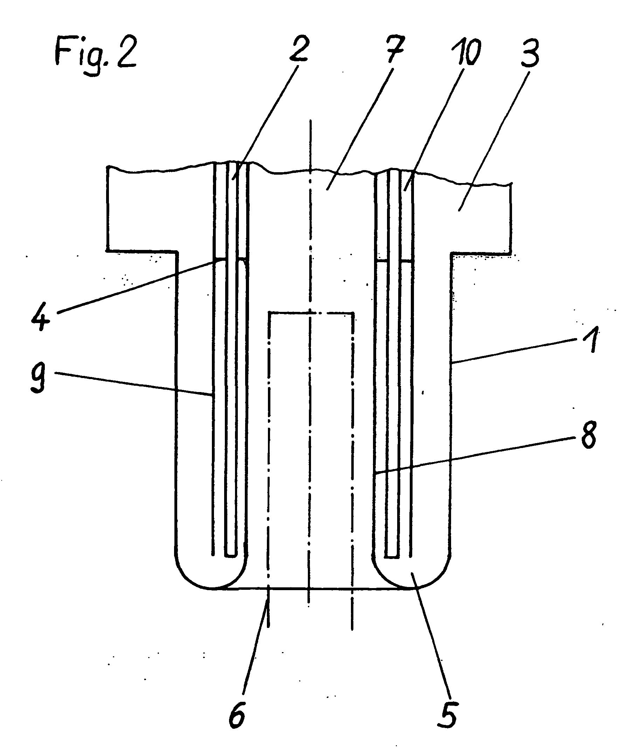

In einem gemeinsamen druckbeständigen Behälter 1 sind der Kocher mit vertikal ausgerichteten Kocherrohren 2 sowie das Reservoir 3 für das Kälte- bzw. Lösungsmittel angeordnet. Unterhalb der Kocherrohre 2, welche von einem ringförmigen Flansch 4 aufgenommen werden, bildet der Behälter 1 einen Ansaugraum 5 für die reiche Ammoniak-Wasser-Lösung. Diese wird mit einer zentral angeordneten Beheizungseinrichtung 6 im Kocher erwärmt.
In Verlängerung der Beheizungseinrichtung 6, d. h. innerhalb der kreisförmig angeordneten Kocherrohre 2, verläuft der Abgaskamin 7. Er wird von einer inneren Wand 8 begrenzt. Zusammen mit einer weiteren Wand 9, welche die Kocherrohre 2 von außen einschließt, entsteht ein ringzylindrischer Raum 10.
Ein nach unten offener Ringraum 11 mit einer Wand 12 befindet sich außen auf der Wand 9 und erstreckt sich mindestens über den unteren Bereich mit der Beheizungseinrichtung 6 bzw. den Bereich mit höchsten Temperaturen im Inneren. Er isoliert den Raum 10 vom umgebenden Ansaugraum 5 bzw. dem Reservoir 3.
Nach Fig. 2 kann zu Isolationszwecken auch die ringförmige Flanschplatte 4 etwa auf dem Niveau des oberen Bereichs des Reservoirs 3 angebracht sein. Die Kocherrohre 2 und die umgebende Wand 9 ragen von dort aus mit einem frei überstehenden Ende bis in den unteren Bereich des Ansaugraumes 5.

## Patentansprüche

1. Kocher für eine Diffusionsabsorptionsanlage, insbesondere mit einer zentralen Beheizungseinrichtung mit darüber liegendem Abgaskamin, vertikal ausgerichteten Kocherrohren als Austreiber bzw. Gasblasenpumpe sowie einem unteren Ansaugraum mit einem Reservoir für reiche Ammoniak-Wasser-Lösung,
**dadurch gekennzeichnet, dass** in einem abgeschlossenen druckbeständigen Behälter (1) mehrere Kocherrohre (2) kreisförmig um eine zentrale Beheizungseinrichtung (6) angeordnet sind.

2. Kocher nach Anspruch 1,
**dadurch gekennzeichnet, dass** ein ringzylindrischer Raum (10) um die Kocherrohre an der Innenseite von einer die Beheizungseinrichtung (6) einfassenden Wand (8) bzw. vom Abgaskamin (7) und nach außen hin von einer umgebenden Wand (9) begrenzt ist, und dass der Raum (10) zwischen der inneren und äußeren Wand (8, 9) insbesondere mit armer Ammoniak-Wasser-Lösung gefüllt ist.

3. Kocher nach den Ansprüchen 1 und 2,
**dadurch gekennzeichnet, dass** die Kocherrohre (2) vorzugsweise gerade ausgebildet sind und mit einer ringförmigen Flanschplatte (4) in den Ansaugraum (5) münden.

4. Kocher nach den Ansprüchen 1 bis 3,
**dadurch gekennzeichnet, dass** die Kocherrohre (2) wahlweise dichtend mit der Flanschplatte (4) verbunden oder passgenau an dieser fixiert sind.

5. Kocher nach den Ansprüchen 1 bis 4,
**dadurch gekennzeichnet, dass** um die äußere, die Kocherrohre (2) einfassende Wand (9) von einer weiteren Wand (12) ein nach unten offener Ringraum (11) gebildet wird, welcher zur Wärmeisolierung zwischen dem Raum (10) um die Kocherrohre (2) und dem Ansaugraum (5) und/oder Reservoir (3) mit der reichen Ammoniak-Wasser-Lösung dient.

6. Kocher nach den Ansprüchen 1 bis 5,
**dadurch gekennzeichnet, dass** sich die zusätzliche Wand (12) bzw. der damit ausgebildete Ringraum (11) mindestens über den unteren Bereich der Kocherrohre (2), vorzugsweise über den gesamten Bereich des Reservoirs (3) bis in die Höhe des maximalen Flüssigkeitsspiegels, erstreckt.

7. Kocher nach den Ansprüchen 1 bis 6,
**dadurch gekennzeichnet, dass** der Ringraum (11) so bemessen ist, dass die Dampfbildung in der von unten eindringenden reichen Ammoniak-Wasser-Lösung durch die von der Innenseite her übertragene Wärme gefördert wird.

8. Kocher nach den Ansprüchen 1 bis 7,
**dadurch gekennzeichnet, dass** die zusätzliche Wand (12) an ihrer Oberseite wahlweise dichtend mit der die Kocherrohre (2) einschließenden Wand (9) verbunden oder passgenau an dieser fixiert ist.

9. Kocher nach den Ansprüchen 1 bis 4,
**dadurch gekennzeichnet, dass** die ringförmige Flanschplatte (4) etwa auf dem Niveau des oberen Bereichs des Reservoirs (3) angebracht ist und die Kocherrohre (2) sowie die Wand (9) von dort aus vorzugsweise frei in den Ansaugraum (5) ragen.

## Claims

1. A boiler for a diffusion absorption plant, especially comprising a central heating plant with an exhaust gas stack located thereabove, vertically aligned boiler pipes as expellers or a gas bubble pump and a lower suction compartment with a reservoir for rich ammonia water solution,
**characterised in that** in a closed pressure-resistant container (1) a plurality of boiler pipes (2) are arranged circularly around a central heating device (6).

2. The boiler according to claim 1,
**characterised in that** an annular cylindrical space (10) around the boiler pipes is defined on the inside by a wall (8) bordering the heating device (6) or by the exhaust gas stack (7) and on the outside by a surrounding wall (9) and that the space (10) between the inner and outer wall (8, 9) is especially filled with a lean ammonia-water solution.

3. The boiler according to claims 1 and 2,
**characterised in that** the boiler pipes (2) are preferably embodied as straight and open into the suction space (5) with an annular flanged plate (4).

4. The boiler according to claims 1 to 3,
**characterised in that** the boiler pipes (2) are optionally connected to the flanged plate (4) in a sealing fashion or are fixed thereto in an exactly fitting manner.

5. The boiler according to claims 1 to 4,
**characterised in that** an annular space (11) which is open at the bottom, is formed around the outer wall (9) bordering the boiler pipes (2) by a further wall (12), which is used for thermal insulation between the space (10) around the boiler pipes (2) and the suction compartment (5) and/or the reservoir (3) containing the rich ammonia-water solution.

6. The boiler according to claims 1 to 5,
**characterised in that** the additional wall (12) or the annular spaced (11) formed thereby extends at least over the lower region of the boiler pipes (2), preferably over the entire area of the reservoir (3) as far as the height of the maximum liquid level.

7. The boiler according to claims 1 to 6,
**characterised in that** the annular space (11) is dimensioned so that steam formation in the rich ammonia-water solution penetrating from below is promoted by the heat transferred from the inside.

8. The boiler according to claims 1 to 7,
**characterised in that** the additional wall (12) is optionally connected at its top to the wall (9) enclosing the boiler pipes (2) in a sealing fashion or is fixed thereto in an exactly fitting manner.

9. The boiler according to claims 1 to 4,
**characterised in that** the annular flanged plate (4) is attached approximately at the level of the upper region of the reservoir (3) and the boiler pipes (2) and the wall (9) preferably project freely therefrom into the suction compartment (5).

## Revendications

1. Bouilleur pour installation d'absorption-diffusion, comportant notamment un dispositif central de chauffage avec une cheminée d'échappement placée au dessus, des tuyaux de bouilleur orientés verticalement faisant office de générateur ou de pompe à bouchon de vapeur ainsi qu'une chambre d'aspiration inférieure équipée d'un réservoir pour une solution riche d'ammoniaque-eau,
**caractérisé en ce que**, dans une cuve fermée résistante à la pression (1), plusieurs tuyaux de bouilleur (2) sont disposés en forme de cercle autour d'un dispositif central de chauffage (6).

2. Bouilleur selon la revendication 1,
**caractérisé en ce qu'**un espace en forme d'anneau cylindrique (10) est délimité autour des tuyaux du bouilleur sur la face interne d'une paroi (8) entourant le dispositif de chauffage (6) ou de la cheminée d'échappement (7) et vers l'extérieur en partant d'une paroi périphérique (9) et que l'espace (10) entre la paroi interne et externe (8, 9) est rempli notamment d'une solution pauvre d'ammoniaque-eau.

3. Bouilleur selon la revendication 1,
**caractérisé en ce que** les tubes du bouilleur (2) sont de préférence réalisés avec une forme droite et débouchent avec une tôle à bord rabattu de forme annulaire (4) dans la chambre d'aspiration (5).

4. Bouilleur selon les revendications 1 à 3,
**caractérisé en ce que** les tubes du bouilleur (2) sont au choix reliés hermétiquement à la tôle à bord rabattu (4) ou sont fixés de manière ajustée sur celle-ci.

5. Bouilleur selon les revendications 1 à 4,
**caractérisé en ce qu'**autour de la paroi externe (9) entourant les tuyaux du bouilleur (2), un espace annulaire (11) ouvert vers le bas est formé par une autre paroi (12), lequel espace annulaire sert à l'isolation thermique entre l'espace (10) entourant les tuyaux du bouilleur (2) et la chambre d'aspiration (5) et/ou le réservoir (3) contenant la solution riche d'ammoniaque-eau.

6. Bouilleur selon les revendications 1 à 5,
**caractérisé en ce que** la paroi supplémentaire (12) ou l'espace annulaire (11) qu'elle constitue s'étend au moins sur la zone inférieure des tubes du bouilleur (2), de préférence sur toute la zone du réservoir (3) jusqu'à hauteur du niveau maximal de liquide.

7. Bouilleur selon les revendications 1 à 6,
**caractérisé en ce que** l'espace annulaire (11) est dimensionné de manière à ce que la formation de vapeur dans la solution riche d'ammoniaque-eau pénétrant par le bas soit favorisée par la chaleur transmise par la face interne.

8. Bouilleur selon les revendications 1 à 7,
**caractérisé en ce que** la paroi supplémentaire (12) est, sur sa face supérieure, au choix reliée hermétiquement à la paroi (9) entourant les tuyaux du bouilleur (2) ou fixée de manière ajustée à celle-ci.

9. Bouilleur selon les revendications 1 à 4,
**caractérisé en ce que** la tôle à bord rabattu de forme annulaire (4) est posée approximativement au niveau de la zone supérieure du réservoir (3) et que les tuyaux du bouilleur (2) ainsi que la paroi (9) font de préférence saillie librement de là dans la chambre d'aspiration (5).
